# EUROPÄISCHE PATENTSCHRIFT

(11) **EP 0 882 663 B1**
(45) Veröffentlichungstag und Bekanntmachung des Hinweises auf die Patenterteilung: **10.09.2003**
(21) Anmeldenummer: 98100581.2
(22) Anmeldetag: 15.01.1998
(51) Int. Cl.: B65G 17/44, B65B 59/00

(54) **Befestigungseinrichtung für einen Behältnisträger an einer Transportvorrichtung**
Device for mounting a container carrier to a transport device
Dispositif pour le montage d' un support de récipients à un dispositif de transport

(30) Priorität: 07.06.1997 DE 19724105
(43) Veröffentlichungstag der Anmeldung: 09.12.1998
(73) Patentinhaber: ROBERT BOSCH GMBH, 70442 Stuttgart (DE)
(72) Erfinder: Krauss, Ulrich, 74532 Ilshofen (DE); Lerner, Jürgen, 74423 Obersontheim (DE)

(56) Entgegenhaltungen:
- WO-A-97/42108
- DE-A- 4 320 477
- US-A- 5 441 146

## Beschreibung

Die Erfindung geht aus von einer Befestigungseinrichtung für einen Behältnisträger an einer Transportvorrichtung nach der Gattung des Anspruchs 1. Bei bekannten Transportvorrichtungen dieser Art werden die Behältnisträger an der Transportvorrichtung befestigt, indem Zentrierstifte die Behältnisträger in der Transportvorrichtung horizontal lagerichtig zentrieren. Durch zusätzliche Schrauben werden die Behältnisträger kraftschlüssig mit der Transportvorrichtung verbunden, so daß die Behältnisträger auch axial gesichert sind. Bei einer Formatumstellung an der Transportvorrichtung, wenn zum Beispiel Spritzenkörper mit einem anderen Volumen mittels der Transportvorrichtung zu Behandlungseinrichtungen gefördert werden sollen, ist in der Regel eine Vielzahl von Behältnisträgern auszutauschen, was mit einem hohen Montageaufwand verbunden ist.

### Vorteile der Erfindung

Die erfindungsgemäße Befestigungseinrichtung für einen Behältnisträger an einer Transportvorrichtung mit den kennzeichnenden Merkmalen des Anspruchs 1 hat den Vorteil, daß die Behältnisträger ohne Werkzeug manuell schnell und einfach ausgetauscht werden können, und daß gleichzeitig eine exakte Positionierung und zuverlässige Befestigung der Behältnisträger an der Transportvorrichtung ermöglicht wird.

Weitere Vorteile und vorteilhafte Weiterbildungen der erfindungsgemäßen Befestigungseinrichtung für einen Behältnisträger an einer Transportvorrichtung ergeben sich aus den Unteransprüchen und der Beschreibung.

### Zeichnung

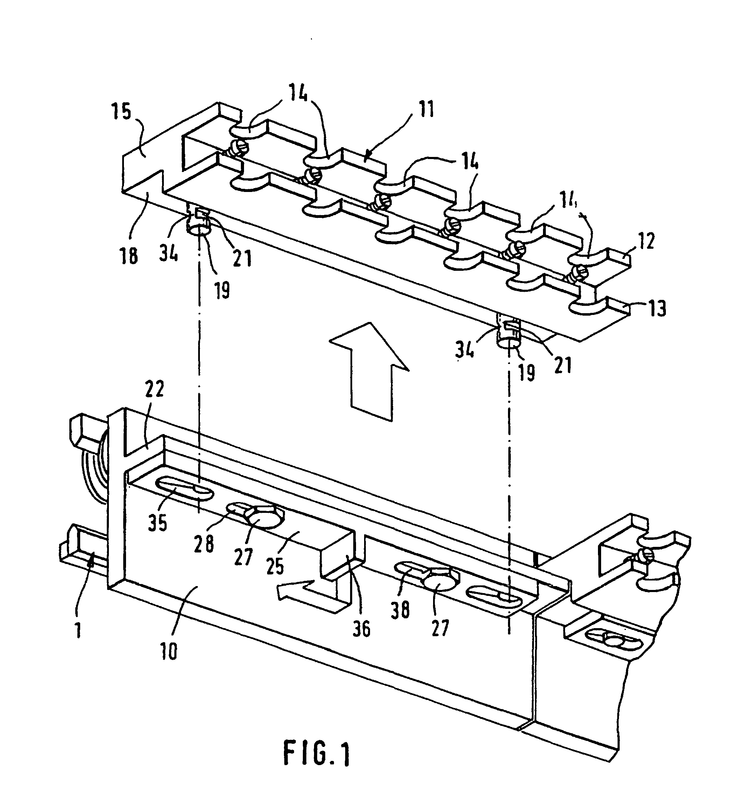

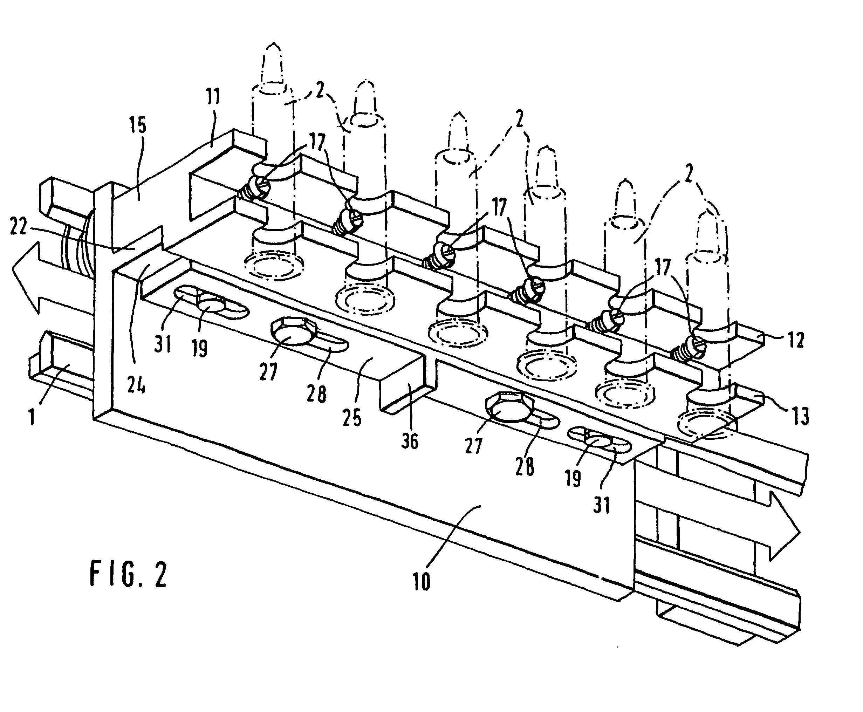

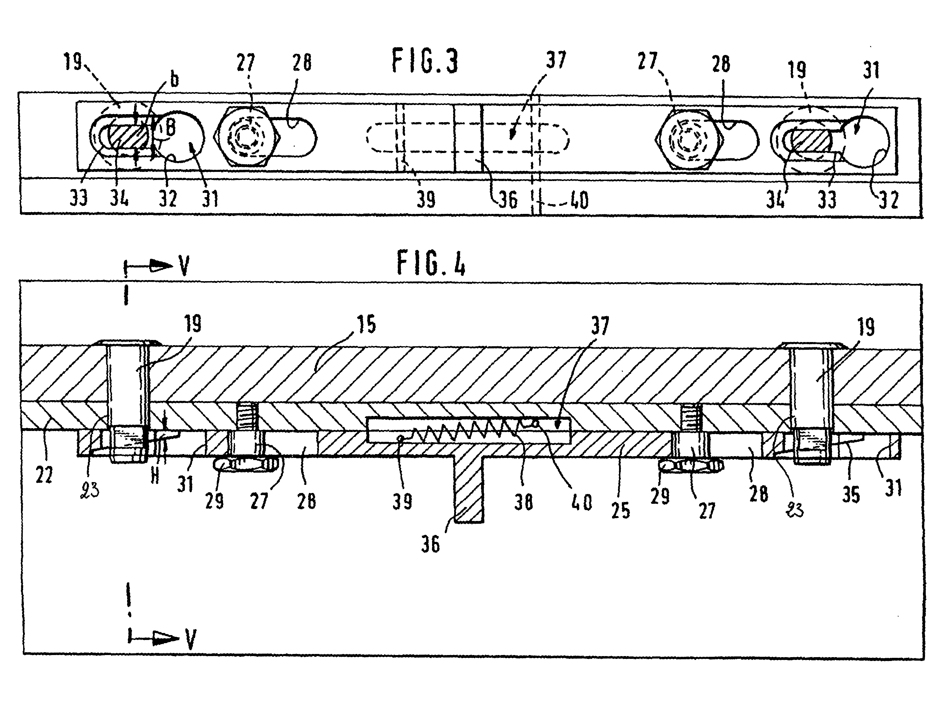

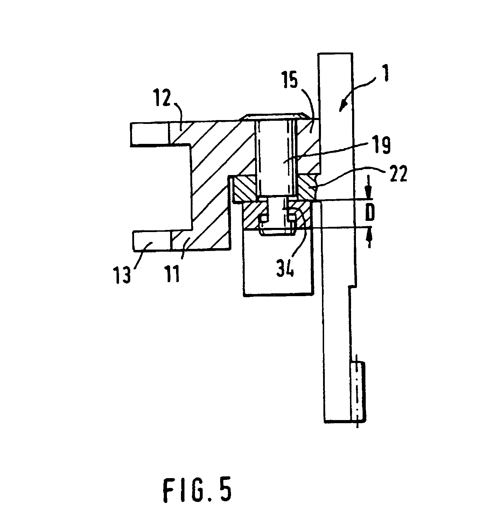

Ein Ausführungsbeispiel der Erfindung ist in der Zeichnung dargestellt und wird im folgenden näher erläutert. Es zeigen die Figuren 1 und 2 perspektivische Darstellungen eines Behältnisträgers an einer Transportvorrichtung in demontiertem bzw. montiertem Zustand, Figur 3 eine Draufsicht und Figur 4 einen Längsschnitt durch einen montierten Behältnisträger, sowie Figur 5 einen Schnitt in der Ebene V-V der Figur 4.

### Beschreibung des Ausführungsbeispiels

Ein in der Figur 1 dargestellter Transportschlitten 10 ist Bestandteil einer Transportvorrichtung 1, die zum Zuführen von pharmazeutischen Behältnissen, wie Spritzenkörpern 2, zu Bearbeitungsstationen dient. Eine derartige Transportvorrichtung ist beispielsweise in der DE 43 20 474 A1 beschrieben, weshalb im folgenden nicht näher auf deren grundsätzlichen Aufbau und Funktion eingegangen wird. Um die Transportvorrichtung 1 an verschiedene Formate der Spritzenkörper 2 anpassen zu können, ist jedem Transportschlitten 10 ein Behältnisträger 11 für jeweils eine Gruppe von Spritzenkörpern 2 zugeordnet, der austauschbar am Transportschlitten 10 befestigbar ist.

Der Behältnisträger 11 weist zwei voneinander parallel beabstandete Halteplatten 12, 13 mit Aussparungen 14 zur formschlüssigen Aufnahme der Spritzenkörper 2 auf. Die beiden Halteplatten 12, 13 haben einen gemeinsamen Sockel 15, an dessen den Aussparungen 14 zugewandter Seite zwischen den Halteplatten 12, 13 jeweils ein elastischer Haltestift 17 für einen Spritzenkörper 2 angeordnet ist. Aus der ebenen Unterseite 18 des Sockels 15 ragen zwei Zentrierbolzen 19, die jeweils zwei gegenüber angeordnete, rechteckförmige Nuten 21 aufweisen.

Zum Befestigen des Behältnisträgers 11 an dem Transportschlitten 10 hat der Transportschlitten 10 eine waagerecht von diesem abstehende Konsole 22, in der in Deckung mit den Zentrierbolzen 19 Zentrierbohrungen 23 ausgebildet sind. An der Unterseite 24 der Konsole 22 ist ein horizontal zwischen zwei Endstellungen bewegbarer Schieber 25 angeordnet. Zur Befestigung, Führung und Begrenzung des Weges des Schiebers 25 sind in der Unterseite 24 der Konsole 22 zwei Führungsbolzen 27 eingeschraubt, die jeweils ein in dem Schieber 25 ausgebildetes Langloch 28 durchgreifen, und deren Bund 29 die Langlöcher 28 seitlich überragen und somit den Schieber 25 vertikal halten.

In Deckung mit den Zentrierbolzen 19 sind in dem Schieber 25 Durchbrüche 31 ausgebildet, die jeweils einen dem Durchmesser der Zentrierbolzen 19 entsprechenden Einführabschnitt 32, und einen von dem Einführabschnitt 32 ausgehenden, im wesentlichen rechteckförmigen Halteabschnitt 33 aufweisen. Die Breite B des Halteabschnitts 33 entspricht dabei der Breite b des Steges 34 an den Zentrierbolzen 19 zwischen den beiden Nuten 21. Auf der der Unterseite 24 der Konsole 22 abgewandten Seite ist der Halteabschnitt 33 erweitert und weist Rampen 35 auf, deren Höhe h ausgehend von dem Einführabschnitt 32 stetig zunimmt.

Die Dicke D des Schiebers 25 und die Anordnung des Steges 34 bzw. der Nuten 21 an den Zentrierbolzen 19 ist derart, daß der Steg 34 bei einem mit der Konsole 22 verbundenen Behältnisträger 11 in Höhe des Schiebers 25 angeordnet und mit dem Halteabschnitt 33 ausgerichtet ist.

Auf halber Länge des Schiebers 25 ist auf der von der Konsole 22 abgewandten Seite am Schieber 25 ein Fortsatz 36 zum Bewegen des Schiebers 25 ausgebildet. Im Bereich des Fortsatzes 36 ist zwischen der Konsole 22 und dem Schieber 25 ein Raum 37 ausgebildet, der von Aussparungen an der Konsole 22 und dem Schieber 25 gebildet wird. In dem Raum 37 ist eine Zugfeder 38 angeordnet, die mittels jeweils eines Stiftes 39, 40 in der Konsole 22 und dem Schieber 25 gehalten ist, und die den Schieber 25 in Richtung des Halteabschnitts 33 zieht.

Zum Befestigen eines Behältnisträgers 11 an einem Transportschlitten 10 wird der Schieber 25 an dem Fortsatz 36 entgegen der Federkraft der Zugfeder 38 gezogen, bis sein maximaler Verschiebeweg erreicht ist, der durch die Länge der Langlöcher 28 vorgegeben ist. In dieser ersten Endstellung des Schiebers 25 sind die Einführabschnitte 32 mit den Zentrierbohrungen 23 ausgerichtet. Nun kann der Behältnisträger 11 auf der Konsole 22 befestigt werden, indem seine Zentrierbolzen 19 in die Zentrierbohrungen 23 eingeführt werden. Das Einführen der Zentrierbolzen 19 erfolgt soweit, bis die Unterseite 18 des Sockels 15 auf der Konsole 22 aufliegt. In dieser Stellung befinden sich die Nuten 21 der Zentrierbolzen 19 in Höhe des Schiebers 25.

Wird nun der Fortsatz 36 am Schieber 25 losgelassen bzw. entlastet, so wird der Schieber 25 infolge der Federkraft der Zugfeder 38 in Richtung des Halteabschnittes 33 gezogen.

Da der Halteabschnitt 33 eine geringere Breite B als der Durchmesser des Zentrierbolzens 19 aufweist ist der Behältnisträger 11 auf der Konsole 22 axial gesichert, sobald sich der Halteabschnitt 33 im Bereich des Steges 34 befindet. Sollte der Behältnisträger 11 beim Entlasten des Fortsatzes 36 noch nicht auf der Konsole 22 aufliegen, so wird der Behältnisträger 11 infolge der Rampen 35 automatisch in Richtung der Konsole 22 gezogen.

Die Demontage eines Behältnisträgers 11 von dem Transportschlitten 10 erfolgt dadurch, daß der Schieber 25 am Fortsatz 36 entgegen der Federkraft der Zugfeder 38 soweit bewegt wird, bis die Einfuhrabschnitte 32 mit den Zentrierbohrungen 23 ausgerichtet sind. In dieser Position kann der Behältnisträger 11 senkrecht aus der Konsole 22 herausgezogen werden.

## Patentansprüche

1. Befestigungseinrichtung für einen Behältnisträger (11) an einer Transportvorrichtung (1), mit an dem Behältnisträger (11) angeordneten, stiftförmigen Zentrierelementen (19), die mit an der Transportvorrichtung (1) ausgebildeten Zentrieröffnungen (23) zusammenwirken, und mit wenigstens einem Verbindungselement zum kraft- und/oder formschlüssigen Befestigen des Behältnisträgers (11) an der Transportvorrichtung (1), **dadurch gekennzeichnet, daß** die Zentrierelemente (19) einen Halteabschnitt (34) aufweisen, daß das Verbindungselement als quer zur Einschubrichtung der Zentrierelemente (19) in die Zentrieröffnungen (23) bewegbarer Schieber (25) ausgebildet ist, der den Zentrierelementen (19) angepaßte Öffnungen (31) aufweist, so daß in einer entriegelten Stellung des Schiebers (25) die Zentrierelemente (19) durch die Öffnungen (31) axial durchführbar sind, und in einer verriegelten Stellung des Schiebers (25) die Öffnungen (31) mit den Halteabschnitten (34) der Zentrierelemente (19) zusammenwirken und so den Behältnisträger (11) axial in der Transportvorrichtung (1) fixieren.

2. Befestigungseinrichtung für einen Behältnisträger an einer Transportvorrichtung nach Anspruch 1, **dadurch gekennzeichnet, daß** elastische Mittel (38) zum Halten des Schiebers (25) in seiner Verriegelungsposition vorgesehen sind.

3. Befestigungseinrichtung für einen Behältnisträger an einer Transportvorrichtung nach Anspruch 1 oder 2, **dadurch gekennzeichnet, daß** die Zentrieröffnungen (23) in einer von der Transportvorrichtung (1) waagerecht hervorstehenden Konsole (22) eines Transportschlittens (10) angeordnet sind, und daß der Schieber (25) auf der dem Behältnisträger (11) gegenüberliegenden Seite an der Konsole (22) angeordnet ist.

4. Befestigungseinrichtung für einen Behältnisträger an einer Transportvorrichtung nach Anspruch 3, **dadurch gekennzeichnet, daß** in der Bewegungsrichtung des Schiebers (25) wenigstens ein Schlitz (28) ausgebildet ist, dessen Länge dem Verschiebeweg des Schiebers (25) zwischen seinen beiden Endstellungen entspricht, und daß in den Schlitz (28) ein als Anschlag und Sicherung dienender Bolzen (27) eingreift.

5. Befestigungseinrichtung für einen Behältnisträger an einer Transportvorrichtung nach Anspruch 3 oder 4, **dadurch gekennzeichnet, daß** die elastischen Mittel (38) zwischen der Konsole (22) und dem Schieber (25) in einem abgeschlossenen Raum (37) angeordnet sind.

## Claims

1. Fastening arrangement for a container carrier (11) on a transport device (1), with pin-shaped centring elements (19) which are arranged on the container carrier (11) and interact with centring openings (23) designed on the transport device (1), and with at least one connecting element for positive and/or non-positive fastening of the container carrier (11) to the transport device (1), **characterized in that** the centring elements (19) have a retaining portion (34), **in that** the connecting element is designed as a slider (25) which can be moved transversely to the insertion direction of the centring elements (19) into the centring openings (23) and has openings (31) adapted to the centring elements (19), so that, in an unlocked position of the slider (25), the centring elements (19) can be passed axially through the openings (31), and, in a locked position of the slider (25), the openings (31) interact with the retaining portions (34) of the centring elements (19) and thus fix the container carrier (11) axially in the transport device (1).

2. Fastening arrangement for a container carrier on a transport device according to Claim 1, **characterized in that** elastic means (38) are provided for holding the slider (25) in its locking position.

3. Fastening arrangement for a container carrier on a transport device according to Claim 1 or 2, **characterized in that** the centring openings (23) are arranged in a bracket (22) of a transport slide (10), which bracket projects horizontally from the transport device (1), and **in that** the slider (25) is arranged on the bracket (22) on the side opposite the container carrier (11).

4. Fastening arrangement for a container carrier on a transport device according to Claim 3, **characterized in that** at least one slot (28) is provided in the movement direction of the slider (25), the length of which slot corresponds to the travel of the slider (25) between its two end positions, and **in that** a bolt (27) serving as a stop and securing means engages in the slot (28).

5. Fastening arrangement for a container carrier on a transport device according to Claim 3 or 4, **characterized in that** the elastic means (38) are arranged between the bracket (22) and the slider (25) in a closed space (37).

## Revendications

1. Installation de fixation d'un support de récipients (11) sur un dispositif de transport (1) comprenant des éléments de centrage (19) en forme de broches portés par le support de récipients (11) qui coopèrent avec des orifices de centrage (23) prévus sur le dispositif de transport (1), et au moins un élément de liaison pour réaliser une fixation par la force et/ou par la forme du support de récipients (11) su le dispositif de transport (1),
**caractérisée en ce que**
les éléments de centrage (19) comportent un segment de fixation (34), l'élément de liaison est réalisé sous la forme d'un tiroir (25) mobile transversalement à la direction d'introduction des éléments de centrage (19) dans les orifices de centrage (23), ce tiroir ayant des orifices (31) adaptés aux éléments de centrage (19) pour que dans une position déverrouillée du tiroir (25), les éléments de centrage (19) puissent être passés axialement à travers les orifices (31) et dans une position de verrouillage du tiroir (25), les orifices (31) coopèrent avec les segments de fixation (34) des éléments de centrage (19) et bloquent axialement le support de récipient (11) dans le dispositif de transport (1).

2. Installation de fixation d'un support de récipients sur un dispositif de transport selon la revendication 1,
**caractérisée par**
des moyens élastiques (38) pour tenir le tiroir (25) dans sa position de verrouillage.

3. Installation de fixation d'un support de récipients sur un dispositif de transport selon l'une quelconque des revendications 1 ou 2,
**caractérisée en ce que**
les orifices de centrage (23) sont prévus dans une console (22) d'un chariot de transport (10), cette console venant horizontalement en saillie par rapport au dispositif de transport (1), et le tiroir (25) est prévu sur la console (22), sur son côté opposé à celui du support de récipient (11).

4. Installation de fixation d'un support de récipients sur un dispositif de transport selon la revendication 3,
**caractérisée en ce que**
dans la direction de déplacement du tiroir (25) on a au moins une fente (28) dont la longueur correspond à la course de coulissement du tiroir (25) entre ces deux positions de fin de course, et un goujon (27) servant de butée et de moyen de fixation pénètre dans la fente (28).

5. Installation de fixation d'un support de récipients sur un dispositif de transport selon l'une quelconque des revendications 3 ou 4,
**caractérisée en ce que**
les moyens élastiques (38) sont prévus entre la console (22) et le tiroir (25) dans un espace fermé (37).
